# EUROPEAN PATENT APPLICATION

(11) **EP 4 105 149 A1**
(43) Date of publication of application: **21.12.2022**
(21) Application number: 21754597.9
(22) Date of filing: 29.01.2021
(51) Int. Cl.: B65G 11/00, B65G 47/44, B65G 47/53

(54) **RECEIVING PLATE, TRANSFER CHUTE, CONVEYING APPARATUS, AND CONVEYING METHOD**

(30) Priority: 10.02.2020 JP 2020020846
(71) Applicant: JFE Steel Corporation, Tokyo 100-0011 (JP)
(72) Inventor: CAO Ningyuan, Tokyo 100-0011 (JP); NISHINA Yoshiaki, Tokyo 100-0011 (JP); SADAMORI Hiroki, Tokyo 100-0011 (JP)
(74) Representative: Hoffmann Eitle
(86) International application number: PCT/JP2021/003416
(87) International publication number: WO 2021/161819

(57) **Abstract**

Disclosed is a receiving plate that can suppress adhesion of conveyed materials. A receiving plate (1) includes two inclined flat-plate-like portions having a flat-plate-like shape and inclined toward each other, each of the two inclined flat-plate-like portions having a receiving surface (19a) configured to receive a conveyed material (2). The inclined flat-plate-like portions (19) are continuously connected to each other and, as a whole, form a convex portion facing in an opposite direction from a conveying direction (D1) of the upstream conveyor (3) in a horizontal cross section.

## Description

### TECHNICAL FIELD

This disclosure relates to a receiving plate, a transfer section chute, a conveying apparatus, and a conveying method.

### BACKGROUND

For example, as described in JPH11-189328A (PTL 1), it is known that a receiving plate is provided in a transfer section of a belt conveyor where a conveyed material is dropped from an upstream conveyor and transferred to a downstream conveyor, and configured to change a direction in which the conveyed material fall by receiving the conveyed material dropped from the upstream conveyor. The receiving plate allows the conveyed material to be properly transferred from the upstream conveyor to the downstream conveyor. Such a receiving plate is usually arranged in the housing of a transfer section chute that covers the transfer section.

### CITATION LIST

### Patent Literature

PTL 1: JPH11-189328A

### SUMMARY

### (Technical Problem)

Conventionally, a problem has been pointed out that when an adherent conveyed material is received by a receiving plate, the conveyed material adhere to the receiving plate and accumulate on it. When the conveyed material is iron ore, coal, or other steelmaking raw material that contains water due to exposure to rain during field loading, and so on, the above problem is particularly noticeable due to their high adhesiveness. If a conveyed material accumulate on a receiving plate, for example, the position of the conveyed material falling on the downstream conveyor is shifted, and the conveyed material is conveyed unevenly, or unbalanced to one side in the width direction, on the downstream conveyor. This increases the load on the belt of the downstream conveyor, causing malfunctions such as reduced belt life and spillage of the conveyed material from the downstream conveyor.

It would thus be helpful to provide a receiving plate, a transfer section chute, a conveying apparatus, and a conveying method that can suppress adhesion of conveyed materials.

### (Solution to Problem)

We thus provide the following.
1. A receiving plate provided in a transfer section of a belt conveyor where a conveyed material is dropped from an upstream conveyor and transferred to a downstream conveyor, and configured to change a direction in which the conveyed material fall by receiving the conveyed material dropped from the upstream conveyor, the receiving plate comprising: two inclined flat-plate-like portions having a flat-plate-like shape and inclined toward each other, each of the two inclined flat-plate-like portions having a receiving surface configured to receive the conveyed materials, wherein the two inclined flat-plate-like portions are continuously connected to each other and, as a whole, form a convex portion facing in an opposite direction from a conveying direction of the upstream conveyor in a horizontal cross section.
2. The receiving plate according to aspect 1, wherein a ridge line formed by overlap between the receiving surfaces of the two inclined flat-plate-like portions is positioned within a width of the upstream conveyor in top view.
3. The receiving plate according to aspect 2, wherein the ridge line is positioned in a vertical plane passing through a widthwise center of the upstream conveyor.
4. The receiving plate according to any one of aspects 1 to 3, wherein the conveyed material is received only by the two inclined flat-plate-like portions.
5. A receiving plate provided in a transfer section of a belt conveyor where a conveyed material is dropped from an upstream conveyor and transferred to a downstream conveyor, and configured to change a direction in which the conveyed material fall by receiving the conveyed material dropped from the upstream conveyor, the receiving plate comprising: two inclined flat-plate-like portions having a flat-plate-like shape and inclined toward each other, each of the two inclined flat-plate-like portions having a receiving surface configured to receive the conveyed material; and an intermediate plate-like portion having a plate-like shape and configured to continuously connect the two inclined flat-plate-like portions to each other, wherein the two inclined flat-plate-like portions and the intermediate plate-like portion, as a whole, form a single convex portion facing in an opposite direction from a conveying direction of the upstream conveyor in a horizontal cross section.
6. The receiving plate according to aspect 5, wherein a ridge line formed by overlap between planes defined by extending the receiving surfaces of the two inclined flat-plate-like portions in a direction approaching each other is positioned within a width of the upstream conveyor in top view.
7. The receiving plate according to aspect 6, wherein the ridge line is positioned in a vertical plane passing through a widthwise center of the upstream conveyor.
8. The receiving plate according to any one of aspects 5 to 7, wherein the conveyed material is received only by the two inclined flat-plate-like portions and the intermediate plate-like portion.
9. The receiving plate according to any one of aspects 5 to 8, wherein the intermediate plate-like portion has a flat-plate-like shape.
10. The receiving plate according to any one of aspects 5 to 8, wherein the intermediate plate-like portion has a bent-plate-like shape.
11. The receiving plate according to any one of aspects 5 to 8, wherein the intermediate plate-like portion has a curved-plate-like shape.
12. The receiving plate according to any one of aspects 5 to 8, wherein the intermediate plate-like portion comprises a curved-plate-like part.
13. The receiving plate according to any one of aspects 1 to 12, wherein each of the two inclined flat-plate-like portions is positioned at least within a width of the upstream conveyor in top view.
14. The receiving plate according to any one of aspects 1 to 13, being symmetrical about a vertical plane passing through a widthwise center of the upstream conveyor.
15. A transfer section chute comprising: a housing configured to cover a transfer section of a belt conveyor where a conveyed material is dropped from an upstream conveyor and transferred to a downstream conveyor; and a receiving plate arranged in the housing and configured to change a direction in which the conveyed material fall by receiving the conveyed material dropped from the upstream conveyor, wherein the receiving plate comprises two inclined flat-plate-like portions having a flat-plate-like shape and inclined toward each other, each of the two inclined flat-plate-like portions having a receiving surface configured to receive the conveyed material, and wherein the inclined flat-plate-like portions are continuously connected to each other and, as a whole, form a convex portion facing in an opposite direction from a conveying direction of the upstream conveyor in a horizontal cross section.
16. A transfer section chute comprising: a housing configured to cover a transfer section of a belt conveyor where a conveyed material is dropped from an upstream conveyor and transferred to a downstream conveyor; and a receiving plate arranged in the housing and configured to change a direction in which the conveyed material fall by receiving the conveyed material dropped from the upstream conveyor, wherein the receiving plate comprises: two inclined flat-plate-like portions having a flat-plate-like shape and inclined toward each other, each of the two inclined flat-plate-like portions having a receiving surface configured to receive the conveyed material; and an intermediate plate-like portion having a plate-like shape and configured to continuously connect the two inclined flat-plate-like portions to each other, and wherein the two inclined flat-plate-like portions and the intermediate plate-like portion, as a whole, form a single convex portion facing in an opposite direction from a conveying direction of the upstream conveyor in a horizontal cross section.
17. A conveying apparatus comprising the transfer section chute as recited in aspect 15 or 16.
18. A conveying method comprising changing, by a receiving plate provided in a transfer section of a belt conveyor where a conveyed material is dropped from an upstream conveyor and transferred to a downstream conveyor, a direction in which the conveyed material fall by receiving the conveyed material dropped from the upstream conveyor by the receiving plate, wherein the receiving plate comprises two inclined flat-plate-like portions having a flat-plate-like shape and inclined toward each other, each of the two inclined flat-plate-like portions having a receiving surface configured to receive the conveyed material, and wherein the two inclined flat-plate-like portions are continuously connected to each other and, as a whole, form a convex portion facing in an opposite direction from a conveying direction of the upstream conveyor in a horizontal cross section.
19. A conveying method comprising changing, by a receiving plate provided in a transfer section of a belt conveyor where a conveyed material is dropped from an upstream conveyor and transferred to a downstream conveyor, a direction in which the conveyed material fall by receiving the conveyed material dropped from the upstream conveyor by the receiving plate, wherein the receiving plate comprises: two inclined flat-plate-like portions having a flat-plate-like shape and inclined toward each other, each of the two inclined flat-plate-like portions having a receiving surface configured to receive the conveyed material; and an intermediate plate-like portion having a plate-like shape and configured to continuously connect the two inclined flat-plate-like portions to each other, and wherein the two inclined flat-plate-like portions and the intermediate plate-like portion, as a whole, form a single convex portion facing in an opposite direction from a conveying direction of the upstream conveyor in a horizontal cross section.

### (Advantageous Effect)

According to the present disclosure, it is possible to provide a receiving plate, a transfer section chute, a conveying apparatus, and a conveying method that can suppress adhesion of conveyed materials.

### BRIEF DESCRIPTION OF THE DRAWINGS

In the accompanying drawings:
FIG. 1 is a perspective view illustrating a conveying apparatus comprising a transfer section chute according to an embodiment of the present disclosure;
FIG. 2 is a cross-sectional view of the conveying apparatus illustrated in FIG. 1, taken along a vertical plane passing through a widthwise center of the upstream conveyor;
FIG. 3 is a top view of the conveying apparatus illustrated in FIG. 1, without the housing;
FIG. 4 is a horizontal cross-sectional view of the receiving plate illustrated in FIG. 1;
FIG. 5 is a cross-sectional view of the receiving plate illustrated in FIG. 1, taken along a plane perpendicular to both of the receiving surfaces of the two inclined flat-plate-like portions;
FIG. 6 is a top view of a variation of the conveying apparatus illustrated in FIG. 1, without the housing;
FIG. 7 is a top view of another variation of the conveying apparatus illustrated in FIG. 1, without the housing;
FIG. 8 is a top view of another variation of the conveying apparatus illustrated in FIG. 1, without the housing;
FIG. 9 is a top view of another variation of the conveying apparatus illustrated in FIG. 1, without the housing;
FIG. 10 illustrates a contact angle of water on a curved-plate-like part;
FIG. 11 illustrates a contact angle of water on a flat-plate-like part; and
FIG. 12 illustrates the evaluation results of the amount of adhesion on the receiving plate illustrated in FIG. 1.

### DETAILED DESCRIPTION

Embodiments of the present disclosure will be described below with reference to the accompanying drawings.

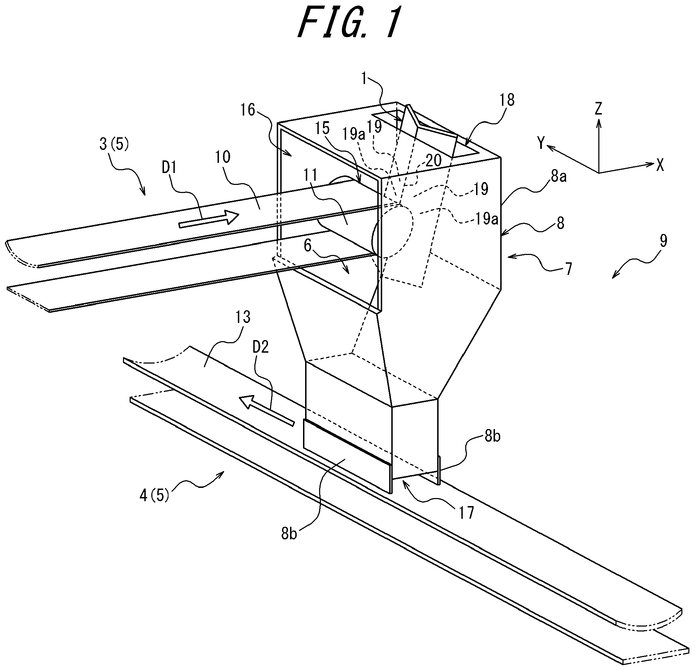

As illustrated in FIGS. 1 to 5, in one embodiment of the present disclosure, a receiving plate 1 is configured to change, in a transfer section 6 of a belt conveyor 5 where a conveyed material 2 is dropped from an upstream conveyor 3 and transferred to a downstream conveyor 4, a direction in which the conveyed material fall by receiving the conveyed material 2 dropped from the upstream conveyor 3. In this embodiment, a transfer section chute 7 comprises: a housing 8 configured to cover the transfer section 6; and the receiving plate 1 arranged in the housing 8. The belt conveyor 5 includes the upstream conveyor 3 and the downstream conveyor 4. In this embodiment, the belt conveyor 5 and the transfer section chute 7 constitute a conveying apparatus 9. A conveying method according to this embodiment comprises changing, by the receiving plate 1 provided in the transfer section 6, a direction in which the conveyed material 2 fall by receiving the conveyed material 2 dropped from the upstream conveyor 3 by the receiving plate 1. In this embodiment, the conveyed material 2 is a water-containing material that has adhesive properties due to the presence of water. For example, the conveyed material 2 is iron ore, coal, or other steelmaking raw material that contains water due to exposure to rain during field loading, and so on. However, the conveyed material 2 is not limited to a water-containing material as long as it has adhesive properties.

The upstream conveyor 3 includes a belt 10 made of cloth, synthetic resin, rubber, or the like, a driver 11 such as a pulley configured to drive the belt 10, and a guide 12 such as a roller configured to guide the belt 10. The downstream conveyor 4 includes a belt 13 made of cloth, synthetic resin, rubber, or the like, a driver such as a pulley (not illustrated) configured to drive the belt 13, and a guide 14 such as a roller configured to guide the belt 13. In

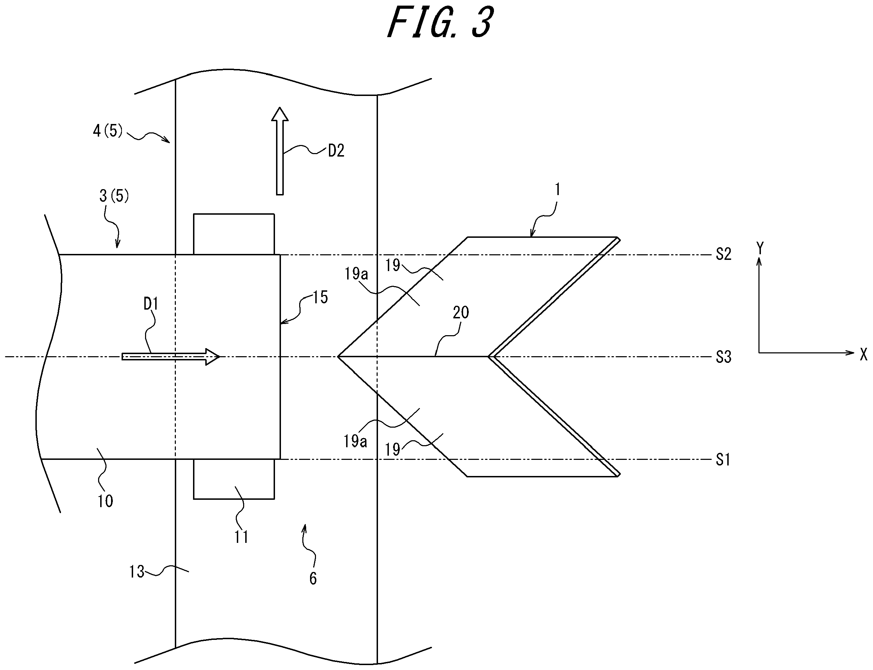

FIG. 1, the guide 12 of the upstream conveyor 3 and the guide of the downstream conveyor 4 are not illustrated. The upstream conveyor 3 has an unloading end 15 that is positioned above the downstream conveyor 4 in the transfer section 6. In FIGS. 1 and 3, a conveying direction D1 of the upstream conveyor 3 and a conveying direction D2 of the downstream conveyor 4 are indicated by white arrows. Either or both of the conveying direction D1 of the upstream conveyor 3 and the conveying direction D2 of the downstream conveyor 4 may be horizontal or inclined vertically upward or downward from the horizontal. As illustrated in FIG. 3, the conveying direction D2 of the downstream conveyor 4 is rotated 90° counterclockwise relative to the conveying direction D1 of the upstream conveyor 3 in top view. However, the conveying direction D2 is not so limited and may be rotated at any other angle such as 270°, 0°, or 180°. The shape of the housing 8 of the transfer section chute 7 may be changed according to this angle. In this embodiment, the up and down directions mean the directions along the vertical direction.

In this embodiment, the X-axis positive direction is the direction that coincides with the conveying direction D1 of the upstream conveyor 3 in a horizontal plane, the Y-axis positive direction is the direction rotated 90° counterclockwise relative to the X-axis positive direction in top view, and the Z-axis positive direction is the vertical-up direction.

The housing 8 includes a housing body 8a made of for example steel material, and two skirts 8b made of for example synthetic resin or rubber, provided at a lower end of the housing body 8a, and facing each other in the width direction of the downstream conveyor 4 (i.e., in the X-axis direction). However, the components of the housing 8 are not so limited. For example, the housing 8 may not have both skirts 8b. The housing 8 has an insertion port 16 into which the unloading end 15 of the upstream conveyor 3 is inserted, and a discharge port 17 configured to discharge the conveyed material 2 toward the upper surface of the downstream conveyor 4. However, the components of the housing 8 are not so limited. The housing 8 is configured to cover the transfer section 6 of the belt conveyor 5, making it possible to prevent the conveyed material 2 from spilling off the belt conveyor 5 in the transfer section 6.

The receiving plate 1 is arranged in the housing 8. The housing 8 has a through-hole 18 through which the receiving plate 1 passes, and the receiving plate 1 is arranged partially within the housing 8. However, the arrangement of the receiving plate 1 is not so limited. For example, the receiving plate 1 may be arranged entirely within the housing 8.

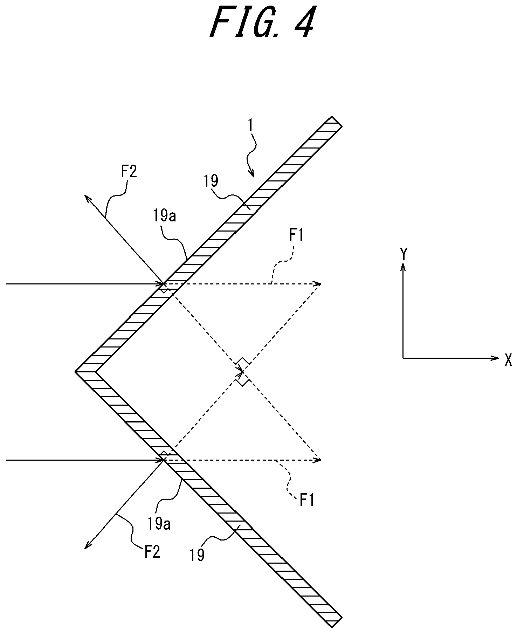

The receiving plate 1 comprises two inclined flat-plate-like portions having a flat-plate-like shape and inclined toward each other, each of the inclined flat-plate-like portions having a receiving surface 19a configured to receive the conveyed material 2. In this embodiment, the two inclined flat-plate-like portions 19 are continuously connected to each other and, as a whole, form a convex portion facing in an opposite direction from the conveying direction D1 of the upstream conveyor 3 (i.e., facing in the X-axis negative direction) in a horizontal cross section (see FIG. 4). Therefore, when the receiving surfaces 19a receive the conveyed material 2 that is unloaded in the conveying direction D1 while falling from the unloading end 15 of the upstream conveyor 3, the repulsive force F2 against the impact force F1 from the conveyed material 2 can be reduced. In other words, since the receiving surfaces 19a are inclined at an angle relative to the conveying direction D1 in the horizontal cross section, the repulsive force F2 can be reduced compared to the conventional case where the receiving surfaces 19a are perpendicular to the conveying direction D1. The direction of inclination is not in the direction of agglomeration of the conveyed material 2 that hit the receiving surfaces 19a, but in the direction of divergence thereof (i.e., one of the inclined flat-plate-like portions 19 on the Y-axis positive direction side is inclined in the X-axis positive direction toward the Y-axis positive direction, and the other inclined flat-plate-like portion 19 on the Y-axis negative direction side is inclined in the X-axis positive direction toward the Y-axis negative direction). Accordingly, this configuration can suppress adhesion of the conveyed material 2 to the receiving surfaces 19a, and thus adhesion of the conveyed material 2 to the receiving plate 1.

The materials and methods for forming the receiving plate 1 are not limited. However, for example, the receiving plate 1 is made of steel and is formed by welding two sheets of steel to each other that respectively constitute the inclined flat-plate-like portions 19. Alternatively, the two inclined flat-plate-like portions 19 may be formed by bending a single sheet of steel.

In this embodiment, the two inclined flat-plate-like portions 19 have the same shape, size, and material property as each other. However, the specifications of the two inclined flat-plate-like portions 19 are not so limited, and the inclined flat-plate-like portions 19 may have different shapes, sizes, or material properties from each other.

In this embodiment, the receiving plate 1 is configured to receive the conveyed material 2 only by the two inclined flat-plate-like portions 19. Accordingly, this configuration may efficiently suppress adhesion of the conveyed material 2 to the receiving plate 1. However, the configuration of the receiving plate 1 is not so limited.

In this embodiment, a ridge line 20 formed by overlap between the receiving surfaces 19a of the two inclined flat-plate-like portions 19 is positioned within a width of the upstream conveyor 3 in top view (see FIG. 3). In other words, the ridge line 20 is positioned between a vertical plane on one widthwise end S1 and a vertical plane on the other widthwise end S2. The vertical plane on one widthwise end S1 is a vertical plane passing through one widthwise end of the upper surface of the belt 10 on which the conveyed material 2 is placed at the unloading end 15 of the upstream conveyor 3 (i.e., an end on the Y-axis negative direction side) and extending along the conveying direction D1. The vertical plane on the other widthwise end S2 is a vertical plane passing through the other widthwise end of the upper surface (i.e., an end on the Y-axis positive direction side) and extending along the conveying direction D1. Accordingly, this configuration allows the two inclined flat-plate-like portions 19 to receive the conveyed material 2 dropped from the upstream conveyor 3 in a more efficient way. However, the configuration of the receiving plate 1 is not so limited.

In this embodiment, the ridge line 20 is positioned in a vertical plane on the widthwise center S3 (see FIG. 3). The vertical plane on the widthwise center S3 is a vertical plane passing through the widthwise center of the upstream conveyor 3 (i.e., the center in the Y-axis direction). Accordingly, this configuration allows the two inclined flat-plate-like portions 19 to receive the conveyed material 2 dropped from the upstream conveyor 3 in a more efficient way. However, the configuration of the receiving plate 1 is not so limited.

In this embodiment, each of the two inclined flat-plate-like portions 19 is positioned at least within the width of the upstream conveyor 3 in top view (see FIG. 3). Accordingly, this configuration allows the two inclined flat-plate-like portions 19 to receive the conveyed material 2 dropped from the upstream conveyor 3 in a more efficient way. However, the configuration of the receiving plate 1 is not so limited.

In this embodiment, the receiving plate 1 is symmetrical about a vertical plane passing through the widthwise center of the upstream conveyor 3, i.e., a vertical plane on the widthwise center S3. Accordingly, the conveyed material 2 dropped from the upstream conveyor 3 can be repelled equally on both sides in the width direction by the receiving surfaces 19a of the two inclined flat-plate-like portions 19 to be transferred to the downstream conveyor 4. Consequently, the balance of loading onto the downstream conveyor 4, which is orthogonal to the upstream conveyor 3, can be improved (i.e., the unevenness of the conveyed material 2 in the width direction of the downstream conveyor 4 can be reduced). Therefore, the life of the downstream conveyor 4 can be extended and spillage of the conveyed material 2 from the downstream conveyor 4 can be reduced. However, the configuration of the receiving plate 1 is not so limited.

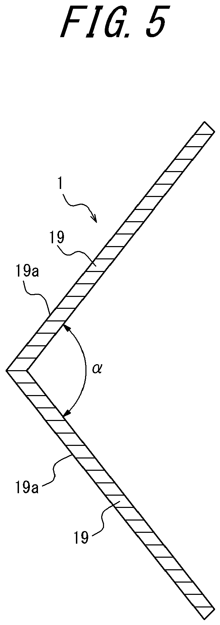

The two inclined flat-plate-like portions 19 form an apex angle α in a cross section along a plane perpendicular to both receiving surfaces 19a thereof. The size of the apex angle α (see FIG. 5) can be set appropriately, taking into account the balance of the load on the downstream conveyor 4 and other factors. The receiving plate 1 may be provided with an adjustable apex angle α.

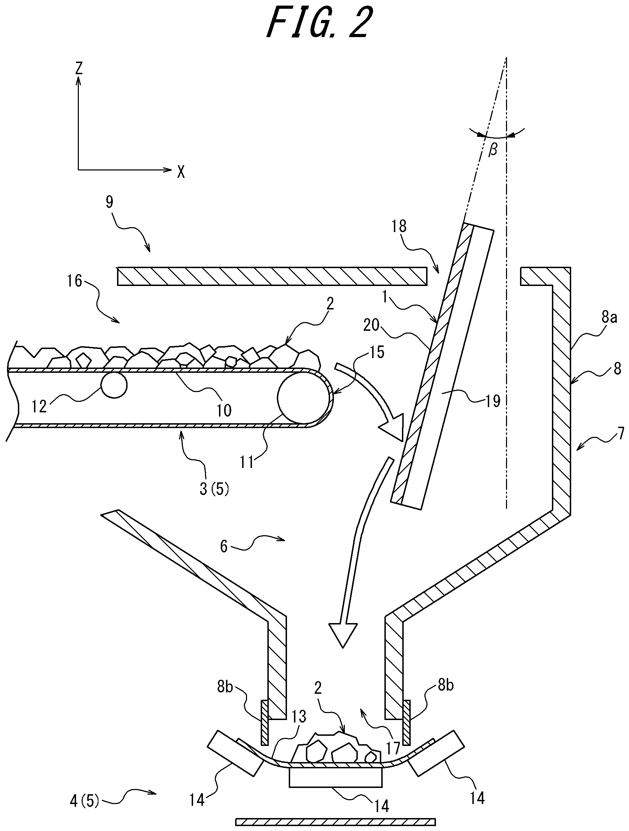

The size of an inclination angle β (see FIG. 2) of the receiving plate 1 relative to the vertical direction (i.e., the Z-axis direction), i.e., an angle formed by the ridge line 20 relative to the vertical direction, can be set appropriately, taking into account the balance of the load on the downstream conveyor 4 and other factors. The receiving plate 1 may be provided with an adjustable inclination angle β.

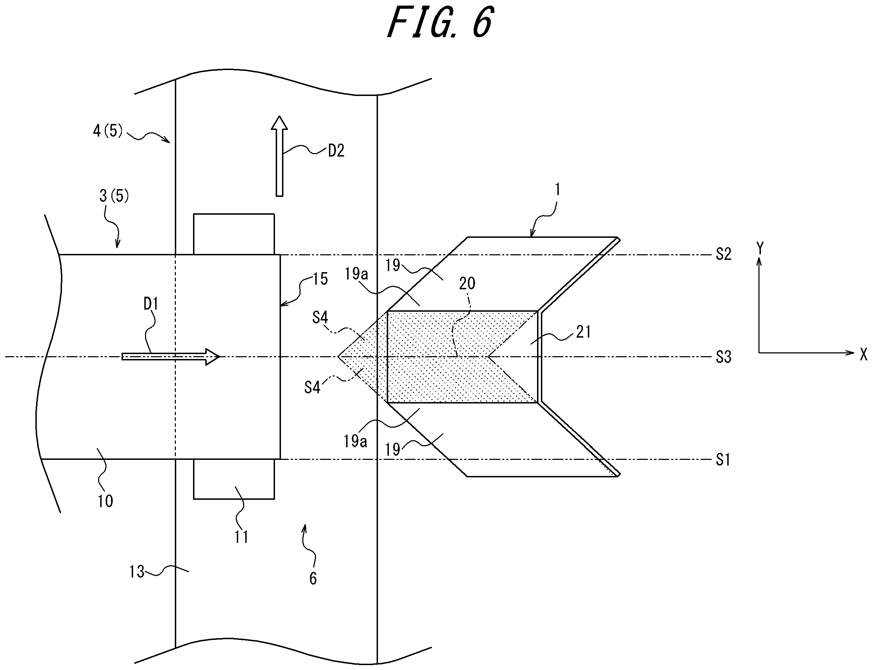

In the receiving plate 1 according to this embodiment, the two inclined flat-plate-like portions 19 are continuously connected to each other and, as a whole, form a convex portion facing in an opposite direction from the conveying direction D1 of the upstream conveyor 3. However, the configuration of the receiving plate 1 is not so limited. For example, the receiving plate 1, as in the various variations illustrated in FIGS. 6 to 9, may comprise: two inclined flat-plate-like portions 19 having a flat-plate-like shape and inclined toward each other, each of the two inclined flat-plate-like portions having a receiving surface 19a configured to receive the conveyed material 2; and an intermediate plate-like portion 21 having a plate-like shape and configured to continuously connect the two inclined flat-plate-like portions 19, wherein the two inclined flat-plate-like portions 19 and the intermediate plate-like portion 21, as a whole, may form a single convex portion facing in an opposite direction from the conveying direction D1 of the upstream conveyor 3 in a horizontal cross section.

In this case, the receiving plate 1 may be configured as follows. A ridge line 20 formed by overlap between extension planes S4 (see shaded areas in FIGS. 6 to 9), which are planes defined by extending the receiving surfaces 19a of the two inclined flat-plate-like portions 19 in a direction approaching each other, may be positioned within the width of the upstream conveyor 3 in top view. The ridge line 20 may be positioned in the vertical plane passing through the widthwise center of the upstream conveyor 3, i.e., the vertical plane on the widthwise center S3. The receiving plate 1 may be configured to receive the conveyed material 2 only by the two inclined flat-plate-like portions 19 and the intermediate plate-like portion 21. Each of the two flat-plate-like portions 19 may be positioned at least within the width of the upstream conveyor 3 in top view. The receiving plate 1 may be symmetrical about the vertical plane passing through the widthwise center of the upstream conveyor 3, i.e., the vertical plane on the widthwise center S3. In FIGS. 6 to 9, elements corresponding to those in the embodiments illustrated in FIGS. 1 to 5 are marked with the same symbol.

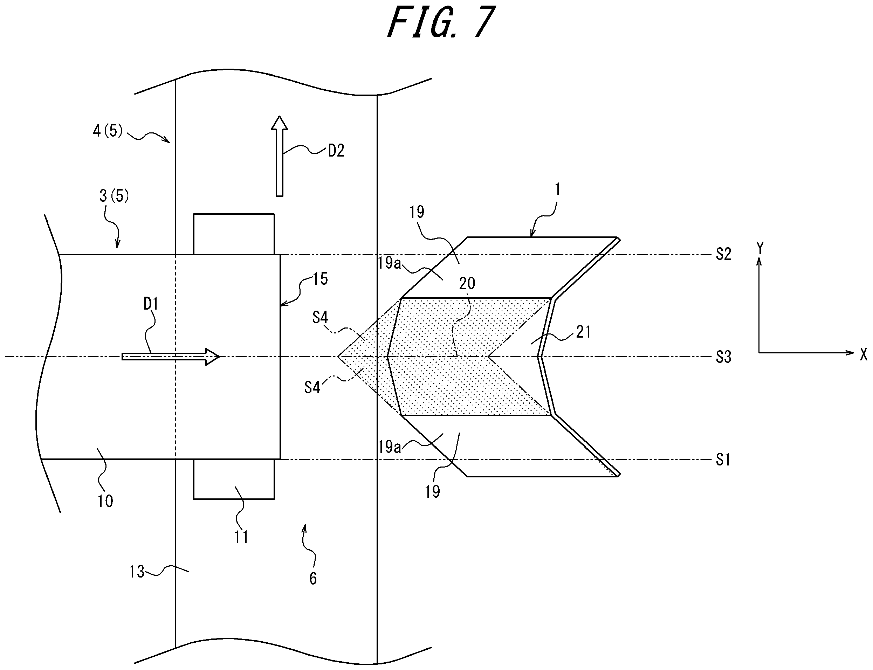

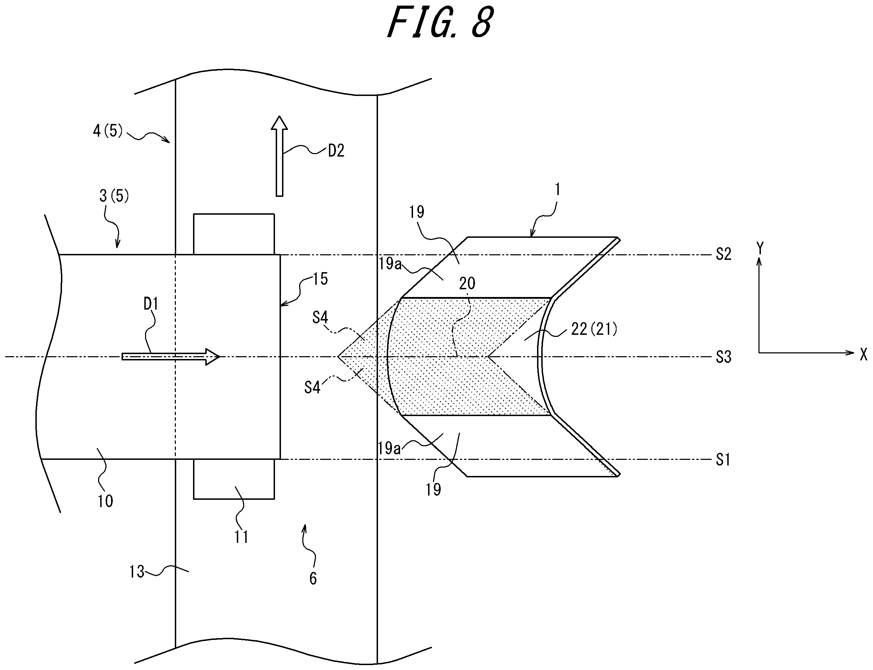

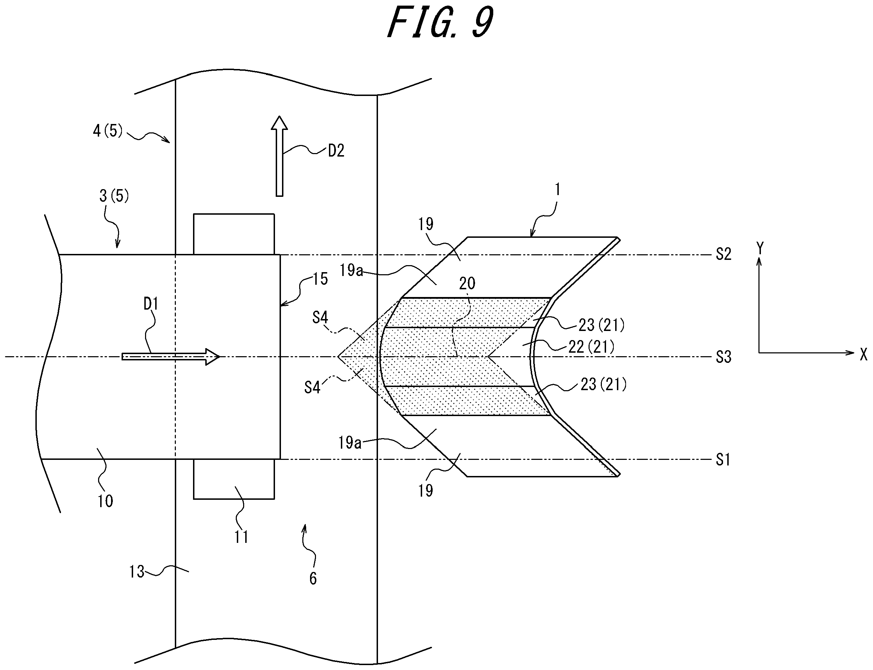

FIG. 6 illustrates a variation in which the intermediate plate-like portion 21 has a flat-plate-like shape. FIG. 7 illustrates a variation in which the intermediate plate-like portion 21 has a bent-plate-like shape. FIG. 8 illustrates In a variation in which the intermediate plate-like portion 21 has a bent-plate-like shape with two folds. However, the number of folds is not so limited and may be three or more. FIGS. 8 to 9 each illustrate a variation in which the intermediate plate-like portion 21 comprises a curved-plate-like part 22. In the variation illustrated in FIG. 8, the intermediate plate-like portion 21 has a curved-plate-like shape. In other words, the intermediate plate-like portion 21 is a curved-plate-like part 22. In the variation illustrated in FIG. 9, the intermediate plate-like portion 21 includes a curved-plate-like part 22 and two flat-plate-like parts 23 configured to respectively connect the curved-plate-part 22 continuously to the inclined flat-plate-like portions 19. The configuration of the intermediate plate-like portion 21 is not limited to that illustrated in FIGS. 6 to 9.

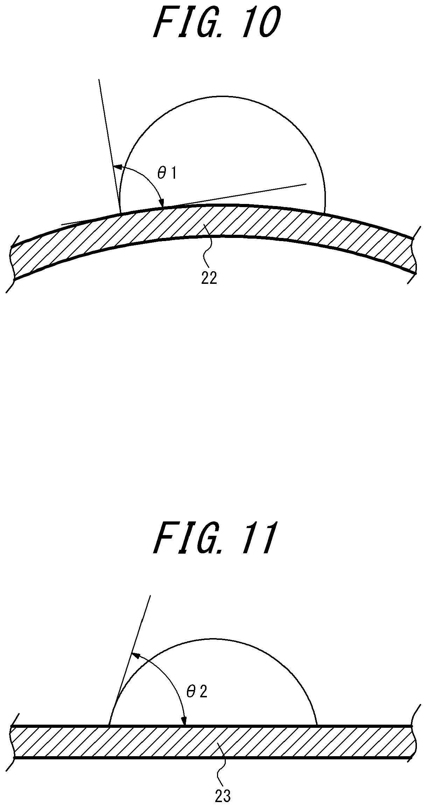

The surface of the curved-plate-like part 22, i.e., the surface that receives the conveyed material 2, has higher water repellency, i.e., has a larger contact angle to water due to its curved shape, when compared to the flat-plate-like parts 23. In other words, as illustrated in FIG. 10 to 11, the contact angle of water at the curved-plate-like part 22, θ1, is larger than the contact angle of water at the flat-plate-like parts 23, θ2. Accordingly, the curved-plate-like part 22 is more difficult for the conveyed material 2 containing water or liquids other than water to adhere to its surface than the flat-plate-like parts 23. Therefore, it is preferable that the intermediate plate-like portion 21 be configured with a curved-plate-like part 22, and more preferable that the intermediate plate-like portion 21 itself have a curved-plate-like shape. This setup makes it possible to reduce adhesion of the conveyed material 2 to the receiving plate 1 more efficiently.

The above-described embodiments and various variations thereof can be modified as needed within the scope of claims.

### EXAMPLES

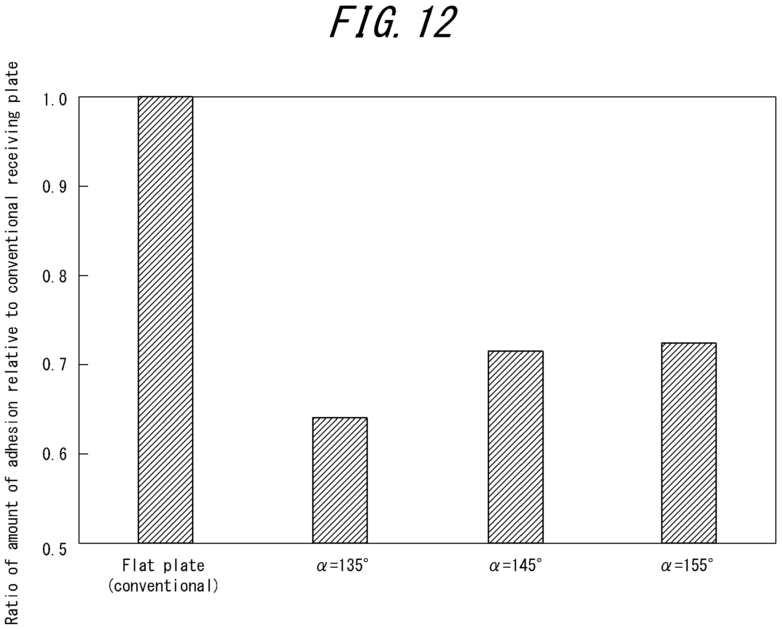

As an example of the present disclosure, the effect of the receiving plates 1 illustrated in FIGS. 1 to 5 on the reduction of the amount of adhesion of the conveyed material 2 was verified by computer simulation. The results are presented in FIG. 12. FIG. 12 illustrates the effect of apex angles α of 135°, 145°, and 155°, respectively, in comparison with the conventional case with a flat receiving plate. Calculation was made with an inclination angle β of 15°. The moisture content of the conveyed material 2 was set to 10 %. In all cases, a 30 % improvement was observed. The effect of the receiving plate 1 illustrated in FIGS. 6 to 7 was also verified in a similar way, and it was found that the effect was equivalent to the effect of the receiving plate 1 illustrated in FIGS. 1 to 5. Thus, the example proved the remarkable effect of the present disclosure.

### REFERENCE SIGNS LIST

- 1: Receiving plate
- 2: Conveyed material
- 3: Upstream conveyor
- 4: Downstream conveyor
- 5: Belt conveyor
- 6: Transfer section
- 7: Transfer section chute
- 8: Housing
- 8a: Housing body
- 8b: Skirt
- 9: Conveying apparatus
- 10: Belt
- 11: Driver
- 12: Guide
- 13: Belt
- 14: Guide
- 15: Unloading end
- 16: Insertion port
- 17: Discharge port
- 18: Through-hole
- 19: Inclined flat-plate-like portion
- 19a: Receiving surface
- 20: Ridge line
- 21: Intermediate plate-like portion
- 22: Curved-plate-like part
- 23: Flat-plate-like part
- D1, D2: Conveying direction
- F1: Collision force
- F2: Repulsive force
- S1: Vertical plane on one widthwise end
- S2: Vertical plane on other widthwise end
- S3: Vertical plane on widthwise center
- S4: Extension plane
- α: Apex angle
- β: Inclination angle
- θ1, θ2: Contact angle

## Claims

1. A receiving plate provided in a transfer section of a belt conveyor where a conveyed material is dropped from an upstream conveyor and transferred to a downstream conveyor, and configured to change a direction in which the conveyed material fall by receiving the conveyed material dropped from the upstream conveyor, the receiving plate comprising:
two inclined flat-plate-like portions having a flat-plate-like shape and inclined toward each other, each of the two inclined flat-plate-like portions having a receiving surface configured to receive the conveyed materials,
wherein the two inclined flat-plate-like portions are continuously connected to each other and, as a whole, form a convex portion facing in an opposite direction from a conveying direction of the upstream conveyor in a horizontal cross section.

2. The receiving plate according to claim 1, wherein a ridge line formed by overlap between the receiving surfaces of the two inclined flat-plate-like portions is positioned within a width of the upstream conveyor in top view.

3. The receiving plate according to claim 2, wherein the ridge line is positioned in a vertical plane passing through a widthwise center of the upstream conveyor.

4. The receiving plate according to any one of claims 1 to 3, wherein the conveyed material is received only by the two inclined flat-plate-like portions.

5. A receiving plate provided in a transfer section of a belt conveyor where a conveyed material is dropped from an upstream conveyor and transferred to a downstream conveyor, and configured to change a direction in which the conveyed material fall by receiving the conveyed material dropped from the upstream conveyor, the receiving plate comprising:
two inclined flat-plate-like portions having a flat-plate-like shape and inclined toward each other, each of the two inclined flat-plate-like portions having a receiving surface configured to receive the conveyed material; and
an intermediate plate-like portion having a plate-like shape and configured to continuously connect the two inclined flat-plate-like portions to each other,
wherein the two inclined flat-plate-like portions and the intermediate plate-like portion, as a whole, form a single convex portion facing in an opposite direction from a conveying direction of the upstream conveyor in a horizontal cross section.

6. The receiving plate according to claim 5, wherein a ridge line formed by overlap between planes defined by extending the receiving surfaces of the two inclined flat-plate-like portions in a direction approaching each other is positioned within a width of the upstream conveyor in top view.

7. The receiving plate according to claim 6, wherein the ridge line is positioned in a vertical plane passing through a widthwise center of the upstream conveyor.

8. The receiving plate according to any one of claims 5 to 7, wherein the conveyed material is received only by the two inclined flat-plate-like portions and the intermediate plate-like portion.

9. The receiving plate according to any one of claims 5 to 8, wherein the intermediate plate-like portion has a flat-plate-like shape.

10. The receiving plate according to any one of claims 5 to 8, wherein the intermediate plate-like portion has a bent-plate-like shape.

11. The receiving plate according to any one of claims 5 to 8, wherein the intermediate plate-like portion has a curved-plate-like shape.

12. The receiving plate according to any one of claims 5 to 8, wherein the intermediate plate-like portion comprises a curved-plate-like part.

13. The receiving plate according to any one of claims 1 to 12, wherein each of the two inclined flat-plate-like portions is positioned at least within a width of the upstream conveyor in top view.

14. The receiving plate according to any one of claims 1 to 13, being symmetrical about a vertical plane passing through a widthwise center of the upstream conveyor.

15. A transfer section chute comprising:
a housing configured to cover a transfer section of a belt conveyor where a conveyed material is dropped from an upstream conveyor and transferred to a downstream conveyor; and
a receiving plate arranged in the housing and configured to change a direction in which the conveyed material fall by receiving the conveyed material dropped from the upstream conveyor,
wherein the receiving plate comprises two inclined flat-plate-like portions having a flat-plate-like shape and inclined toward each other, each of the two inclined flat-plate-like portions having a receiving surface configured to receive the conveyed material, and
wherein the inclined flat-plate-like portions are continuously connected to each other and, as a whole, form a convex portion facing in an opposite direction from a conveying direction of the upstream conveyor in a horizontal cross section.

16. A transfer section chute comprising:
a housing configured to cover a transfer section of a belt conveyor where a conveyed material is dropped from an upstream conveyor and transferred to a downstream conveyor; and
a receiving plate arranged in the housing and configured to change a direction in which the conveyed material fall by receiving the conveyed material dropped from the upstream conveyor,
wherein the receiving plate comprises:
two inclined flat-plate-like portions having a flat-plate-like shape and inclined toward each other, each of the two inclined flat-plate-like portions having a receiving surface configured to receive the conveyed material; and
an intermediate plate-like portion having a plate-like shape and configured to continuously connect the two inclined flat-plate-like portions to each other, and
wherein the two inclined flat-plate-like portions and the intermediate plate-like portion, as a whole, form a single convex portion facing in an opposite direction from a conveying direction of the upstream conveyor in a horizontal cross section.

17. A conveying apparatus comprising the transfer section chute as recited in claim 15 or 16.

18. A conveying method comprising changing, by a receiving plate provided in a transfer section of a belt conveyor where a conveyed material is dropped from an upstream conveyor and transferred to a downstream conveyor, a direction in which the conveyed material fall by receiving the conveyed material dropped from the upstream conveyor by the receiving plate,
wherein the receiving plate comprises two inclined flat-plate-like portions having a flat-plate-like shape and inclined toward each other, each of the two inclined flat-plate-like portions having a receiving surface configured to receive the conveyed material, and
wherein the two inclined flat-plate-like portions are continuously connected to each other and, as a whole, form a convex portion facing in an opposite direction from a conveying direction of the upstream conveyor in a horizontal cross section.

19. A conveying method comprising changing, by a receiving plate provided in a transfer section of a belt conveyor where a conveyed material is dropped from an upstream conveyor and transferred to a downstream conveyor, a direction in which the conveyed material fall by receiving the conveyed material dropped from the upstream conveyor by the receiving plate,
wherein the receiving plate comprises:
two inclined flat-plate-like portions having a flat-plate-like shape and inclined toward each other, each of the two inclined flat-plate-like portions having a receiving surface configured to receive the conveyed material; and
an intermediate plate-like portion having a plate-like shape and configured to continuously connect the two inclined flat-plate-like portions to each other, and
wherein the two inclined flat-plate-like portions and the intermediate plate-like portion, as a whole, form a single convex portion facing in an opposite direction from a conveying direction of the upstream conveyor in a horizontal cross section.
